# EUROPÄISCHE PATENTSCHRIFT

(11) **EP 0 708 261 B1**
(45) Veröffentlichungstag und Bekanntmachung des Hinweises auf die Patenterteilung: **08.04.1998**
(21) Anmeldenummer: 95810537.1
(22) Anmeldetag: 30.08.1995
(51) Int. Cl.: F16B 43/00

(54) **Befestigungsvorrichtung zum Befestigen von Bauteilen**
Fixing device for fastening construction parts
Dispositif de fixation pour fixer des éléments de construction

(30) Priorität: 21.10.1994 DE 4437648
(43) Veröffentlichungstag der Anmeldung: 24.04.1996
(73) Patentinhaber: HILTI Aktiengesellschaft, 9494 Schaan (LI)
(72) Erfinder: Plank, Wolfgang, A-6806 Feldkirch-Tosters (AT)
(74) Vertreter: Wildi, Roland

(56) Entgegenhaltungen:
- EP-A- 0 400 347
- DE-A- 3 140 459
- DE-A- 4 243 185
- DE-U- 8 300 961

## Beschreibung

Die Erfindung betrifft eine Befestigungsvorrichtung zum Befestigen eines Bauteils mit einem Befestigungselement und einer Abdeckplatte in Verbindung mit dem eine Öffnung mit unrundem Querschnitt aufweisenden Bauteil, dessen Öffnung sich aus einer runden Bohrung mit zwei symmetrisch ausgebildeten, einander diametral gegenüberliegenden Erweiterungen zusammensetzt, deren parallel zur Symmetrieachse der Erweiterungen gemessene Breite nach aussen hin zunimmt, wobei die Abdeckplatte die Öffnung wenigstens teilweise abdeckt und eine runde Durchtrittsöffnung sowie auf einer Flachseite beidseits der Durchtrittsöffnung zwei einander diametral gegenüberliegende, in die Erweiterungen der Öffnung des Bauteiles einfügbare Vorsprünge aufweist.

Zur Befestigung von Profilschienen an Bauteilen dienen Vorrichtungen, wie sie aus der DE-OS 42 43 185 bekannt sind, die sich jeweils aus einem Befestigungselement, einer einen unrunden Kopf aufweisenden Schienenmutter und einer eine unrunde Öffnung des Bauteiles wenigstens teilweise abdeckenden, mit Vorsprüngen in die Öffnung ragenden Abdeckplatte zusammensetzen. Um eine einfache und schnelle Vormontage der Vorrichtung an den Bauteilen gewährleisten zu können, ist der unrunde Kopf der Schienenmutter auf den Querschnitt der Öffnung des Bauteiles abgestimmt, so dass die Schienenmutter der Verschraubung in einer bestimmten Winkelstellung durch die Öffnung des Bauteiles durchgeführt werden kann, ohne dass die Schienenmutter von dem Befestigungselement abgeschraubt werden muss.

Um eine Befestigung dieser Bauteile an festen Untergründen ermöglichen zu können, kann beispielsweise die Abdeckplatte der bekannten Vorrichtung verwendet werden, mit deren Hilfe ein Befestigungselement in Form einer Schraube innerhalb der Öffnung zentral geführt werden kann. Beim Zusammenwirken des Befestigungselementes mit einem im Untergrund angeordneten Dübelelement kann eine Anpresskraft erzeugt werden, die ausgehend von dem Befestigungselement über die Abdeckplatte auf das Bauteil wirkt. Da aber die bekannte Abdeckplatte die unrunde Öffnung nur auf zwei Seiten überragt und somit nur auf zwei einander diametral gegenüberliegenden Bereichen auf dem Bauteil aufliegt, kann eine derart hohe Flächenpressung auftreten, dass eine Verformung der Öffnung in Form einer Verengung entstehen kann. Eine weitere Verwendung dieses Bauteiles in Verbindung mit Verschraubungen ist nicht mehr möglich, da die Schienenmutter der Verschraubung nicht mehr durch die Öffnung gesteckt werden kann.

Der Erfindung liegt somit die Aufgabe zugrunde, eine Befestigungsvorrichtung zu schaffen, bei der die vom Befestigungselement ausgehende Anpresskraft gleichmässig über den Umfang der Öffnung verteilt auf das Bauteil übertragen wird.

Erfindungsgemäss wird dies dadurch erreicht, dass in Richtung Plattenebene die Aussenkontur der Vorsprünge von der Aussenkontur der Abdeckplatte überragt wird.

Durch die erfindungsgemässe Abdeckplatte wird die von dem Befestigungselement auf die Abdeckplatte übertragene Anpresskraft gleichmässig über den Umfang der unrunden Öffnung verteilt. Eine erhöhte Flächenpressung und eine Verformung der Öffnung wird dadurch vermieden.

Damit die Abdeckplatte parallel zur Symmetrieachse der Erweiterungen gegenüber der Öffnung des Bauteiles zentriert werden kann, weist vorzugsweise die Abdeckplatte an der Flachseite mit dem Bauteil zusammenwirkende Führungen auf.

Aus Gründen der Herstellkosten sind diese Führungen zweckmässigerweise von abgebogenen Seitenrändern der Abdeckplatte gebildet, die das Bauteil wenigstens teilweise umgreifen.

Damit eine Verschiebung der Abdeckplatte gegenüber dem Bauteil möglich ist, sind vorzugsweise zwei parallel zueinander verlaufende Führungen vorgesehen.

Um eine Vormontage der Abdeckplatte an dem Bauteil ermöglichen zu können, weist die Abdeckplatte vorteilhafterweise ein mit dem Bauteil in Verbindung bringbares Vorsteckteil auf. Dieses Vorsteckteil ist axial- und drehfest mit der Abdeckplatte verbunden und ragt in die kreisrunde Bohrung der Öffnung des Bauteiles.

Um die Festlegung der Abdeckplatte an dem Bauteil ermöglichen zu können, ist das Vorsteckteil vorzugsweise parallel zur Flachseite des Bauteiles wenigstens teilweise federbar und übersteigt im entspannten Zustand die Aussenkontur der Öffnung des Bauteiles wenigstens teilweise.

Die Erfindung wird anhand von Zeichnungen, die zwei Ausführungsbeispiele wiedergeben, näher erläutert. Es zeigen:
- Fig. 1: eine Abdeckplatte der erfindungsgemässen Befestigungsvorrichtung in Verbindung mit einem winkelförmigen Bauteil;
- Fig. 2: die komplette Befestigungsvorrichtung in Verbindung mit einem Bauteil, einem Untergrund und einer Profilschiene;
- Fig. 3: eine Abdeckplatte und Vorsteckteil einer weiteren erfindungsgemässen Befestigungsvorrichtung, in Verbindung mit einem leistenförmigen Bauteil;
- Fig. 4: einen Schnitt durch die Fig. 3 entlang der Linie IV-IV.

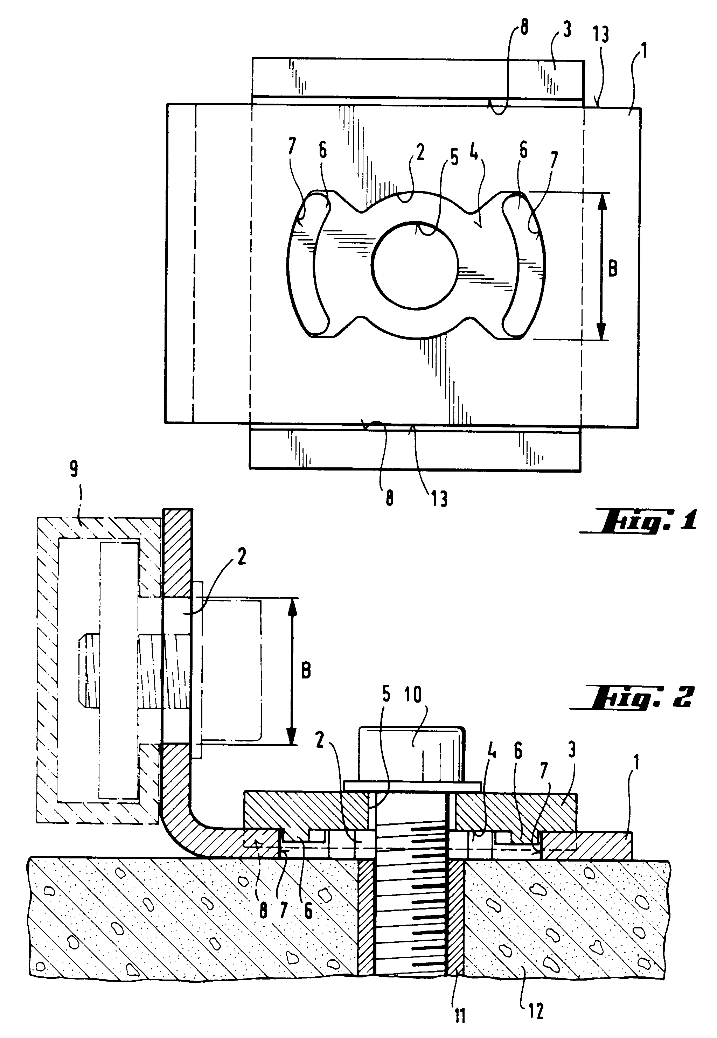

Die Figur 1 zeigt eine Abdeckplatte 3 einer Befestigungsvorrichtung in Verbindung mit einem winkelförmigen Bauteil 1, das eine Öffnung 2 besitzt, die sich aus einer kreisrunden Bohrung und zwei einander diametral gegenüberliegenden Erweiterungen 7 zusammensetzt. Die Erweiterungen 7 sind symmetrisch ausgebildet und eine parallel zur Symmetrieachse der Erweiterungen 7 gemessene Breite B nimmt nach aussen hin zu. Die mit Ausnahme der Durchtrittsöffnung 5 die Öffnung 2 abdeckende Abdeckplatte 3 besitzt an einer Flachseite 4 zwei einander diametral gegenüberliegende Vorsprünge 6, deren senkrecht zur Flachseite 4 der Abdeckplatte 3 verlaufende Kontur zumindest einem Teil der Umfangskontur der Erweiterungen 7 der Öffnung 2 des Bauteiles 1 entspricht.

Die Vorsprünge 6 aufweisende Flachseite 4 der Abdeckplatte 3 weist mit dem Bauteil 1 zusammenwirkende Führungen 8 auf, die einander diametral gegenüberliegende Seitenbereiche 13 des Bauteiles 1 übergreifen.

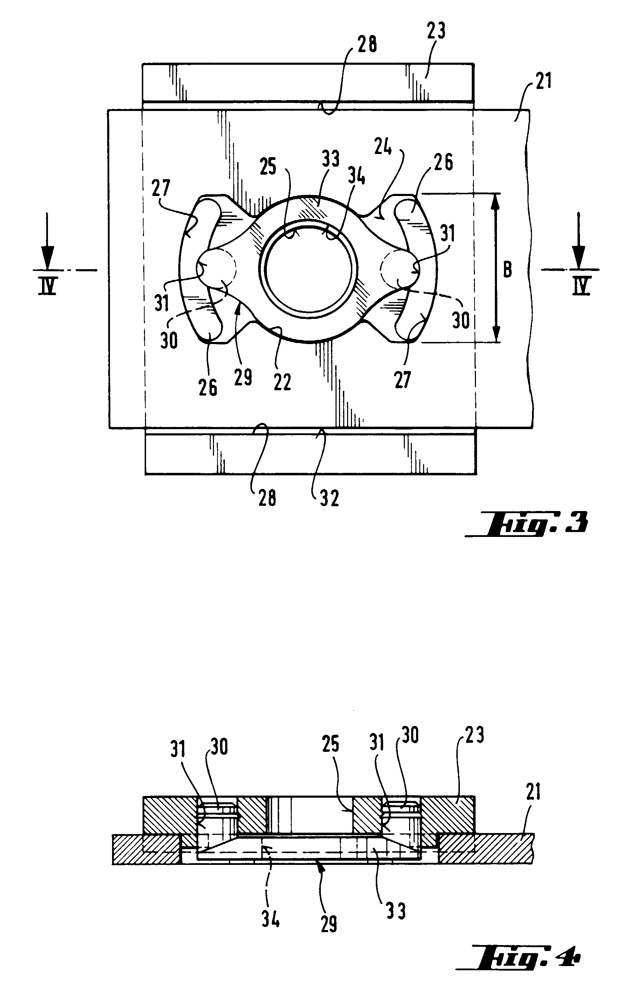

Die Fig. 2 zeigt die komplette Befestigungsvorrichtung mit Abdeckplatte 3 und Befestigungselement 10 in Verbindung mit einem Bauteil 1, einem Untergrund 12 und einer Profilschiene 9. Ein Befestigungselement 10 in Form einer Schraube ragt durch die Durchtrittsöffnung 5 der Abdeckplatte 3 und die kreisrunde Bohrung einer der Öffnungen 2 des winkelförmigen Bauteiles 1 in ein im Untergrund 12 angeordnetes Dübelelement 11.

Die an der Flachseite 4 der Abdeckplatte 3 angeordneten Vorsprünge 6 ragen wenigstens teilweise in die Erweiterungen 7 des Bauteiles 1. Der Kopf des Befestigungselementes 10 liegt unter Zwischenlage einer Beilagscheibe auf jener Flachseite der Abdeckplatte 3 auf, die der Flachseite 4 mit den Vorsprüngen 6 gegenüberliegt. Das Bauteil 1 ist mit einer schematisch dargestellten Profilschiene 9 mit Hilfe einer schematisch dargestellten Verschraubung verbunden, eine Schienenmutter der Verschraubung weist einen der Öffnung 2 des Bauteiles 1 entsprechenden unrunden Kopf auf.

In den Figuren 3 und 4 ist eine Abdeckplatte 23 und ein Vorsteckteil 29 einer weiteren Befestigungsvorrichtung teilweise geschnitten dargestellt. Die auf einem Bauteil 21 aufliegende Abdeckplatte 23 besitzt eine Flachseite 24, von der Vorsprünge 26 und Führungen 28 in Form von abgebogenen Seitenrändem abragen. Die abgebogenen Seitenränder übergreifen die Seitenränder 32 des Bauteiles 21 wenigstens teilweise. Die Vorsprünge 26 liegen einander diametral gegenüber, wobei die senkrecht zur Flachseite 24. der Abdeckplatte 23 verlaufende Kontur der Vorsprünge 26 zumindest einem Teil der Umfangskontur der Erweiterungen 27 der Öffnung 22 entspricht. Die von einer kreisrunden Bohrung der Öffnung 22 des Bauteiles 21 ausgehenden Erweiterungen 27 besitzen eine parallel zur Symmetrieachse der Erweiterungen 27 gemessene Breite B, die nach aussen hin zunimmt.

Ein mit der Abdeckplatte 23 in Verbindung stehendes Vorsteckteil 29 besteht im wesentlichen aus einem elastischen Ring 33, von dem zwei einander diametral gegenüberliegende, stiftförmige Verbindungselemente 30 abragen. Die Grösse einer zentralen Durchgangsbohrung 34 des Ringes 33 entspricht im wesentlichen der Grösse der runden Durchtrittsöffnung 25 der Abdeckplatte 23. Stiftförmige Verbindungselemente 30 ragen in entsprechende, einander diametral gegenüberliegende Aufnahmebohrungen 31 der Abdeckplatte 23. Radial in die Aufnahmebohrungen 31 ragende Kanten greifen beim Zusammenstecken beider Teile in zumindest teilweise umlaufend ausgebildete Vertiefungen der stiftförmigen Verbindungselemente 30. Auf diese Weise wird eine einrastbare axiale Festlegung des Vorsteckteiles 29 an der Abdeckplatte 23 erreicht.

Die Aussenkontur des elastischen Ringes 33 überragt im entspannten Zustand die Aussenkontur der kreisrunden Bohrung der Öffnung 22 des Bauteiles 21 teilweise und wird beim Einsetzen in die kreisrunde Bohrung radial zusammengedrückt. Die Vorspannung, die dabei entsteht, erzeugt eine Reibung an der Innenwandung der kreisrunden Bohrung. Diese Reibung reicht aus, um die Abdeckplatte 23 an dem Bauteil 21 vormontieren zu können.

## Patentansprüche

1. Befestigungsvorrichtung zum Befestigen eines Bauteiles (1,21), mit einem Befestigungselement (10) und einer Abdeckplatte (3, 23) in Verbindung mit dem eine Öffnung (2, 22) mit unrundem Querschnitt aufweisenden Bauteil (1, 21), dessen Öffnung (2, 22) sich aus einer runden Bohrung mit zwei symmetrisch ausgebildeten, einander diametral gegenüberliegenden Erweiterungen (7, 27) zusammensetzt, deren parallel zur Symmetrieachse der Erweiterungen (7, 27) gemessene Breite (B) nach aussen hin zunimmt, wobei die Abdeckplatte (3, 23) die Öffnung (2, 22) wenigstens teilweise abdeckt und eine runde Durchtrittsöffnung (5, 25) sowie auf einer Flachseite (4, 24) beidseits der Durchtrittsöffnung (5, 25) zwei einander diametral gegenüberliegende, in die Erweiterungen (7, 27) der Öffnung (2, 22) des Bauteiles (1, 21) einfügbare Vorsprünge (6, 26) aufweist, **dadurch gekennzeichnet,** dass in Richtung Plattenebene die Aussenkontur der Vorsprünge (6, 26) von der Aussenkontur der Abdeckplatte (3, 23) überragt wird.

2. Befestigungsvorrichtung nach Anspruch 1, dadurch gekennzeichnet, dass die Abdeckplatte (3, 23) an der Flachseite (4, 24) mit dem Bauteil (1, 21) zusammenwirkende Führungen (8, 28) aufweist.

3. Befestigungsvorrichtung nach Anspruch 2, dadurch gekennzeichnet, dass die Führungen (8, 28) von abgebogenen Seitenrandem der Abdeckplatte (3, 23) gebildet sind.

4. Befestigungsvorrichtung nach Anspruch 2 oder 3, dadurch gekennzeichnet, dass zwei parallel zueinander verlaufende Führungen vorgesehen sind.

5. Befestigungsvorrichtung nach Anspruch 1 bis 4, dadurch gekennzeichnet, dass die Abdeckplatte (23) ein mit dem Bauteil (21) in Verbindung bringbares Vorsteckteil (29) aufweist.

6. Befestigungsvorrichtung nach Anspruch 5, dadurch gekennzeichnet, dass das Vorsteckteil (29) parallel zur Flachseite (24) des Bauteiles (21) wenigstens teilweise federbar ist und im entspannten Zustand die Aussenkontur der Öffnung (22) des Bauteiles (21) wenigstens teilweise übersteigt.

## Claims

1. Fixing device for fixing an assembly component (1, 21), comprising a fixing element (10) and a cover plate (3, 23) in conjunction with an assembly component (1, 21) having an opening (2, 22) of unround cross-section the opening (2, 22 ) of which is composed of a round bore with two symmetrically structured diametrically oppositely positioned extensions (7, 27), the width (B) of which, measured parallel to the symmetry axis of the extensions (7, 27), increases towards the outside, and the cover plate (3, 23) at least partially covers the opening (2, 22) and comprises a round passage (5, 25) as well as on one flat side (4, 24) on both sides of the passage (5, 25) two protrusions (6, 26) which are diametrically opposite each other and insertible into the extensions (7, 27) of the opening (2, 22) of the assembly component (1, 21), **characterised in that** in the direction of the plate plane the outside contour of the protrusions (6, 26) is protruded over by the outside contour of the cover plate (3, 23).

2. Fixing device according to Claim 1, **characterised in that** the cover plate (3, 23) comprises on the flat side (4, 24) guides (8, 28) which co-operate with the assembly component (1, 21).

3. Fixing device according to Claim 2, **characterised in that** the guides (8, 28) are formed by bent off side edges of the cover plate (3, 23).

4. Fixing device according to Claim 2 or 3, **characterised in that** two guides which extend parallel to each other are provided.

5. Fixing device according to Claim 1 to 4, **characterised in that** the cover plate (23) comprises a push-on part (29) which is connectable to the assembly component (21).

6. Fixing device according to Claim 5, **characterised in that** the push-on part (29) is at least partially sprung parallel to the flat side (24) of the assembly component (21) and in its released state at least partially extends over the outside contour of the opening (22) of the assembly component (21).

## Revendications

1. Dispositif de fixation pour fixer un élément de construction (1, 21), comprenant un élément de fixation (10) et une plaque de recouvrement (3, 23) coopérant avec l'élément de construction (1, 21) qui comporte une ouverture (2, 22) de section non ronde et dont l'ouverture (2, 22) se compose d'un trou rond pourvu de deux parties élargies (7, 27) qui sont symétriques et diamétralement opposées et dont la largeur (B) mesurée parallèlement à l'axe de symétrie des parties élargies (7, 27) augmente vers l'extérieur, la plaque de recouvrement (3, 23) recouvrant au moins partiellement l'ouverture (2, 22) et comportant une ouverture débouchante ronde (5, 25) ainsi que, sur la face plate (4, 24), de part et d'autre de l'ouverture débouchante (5, 25), deux saillies (6, 26) diamétralement opposées et insérées dans les parties élargies (7, 27) de l'ouverture (2, 22) de l'élément de construction (1, 21), caractérisé en ce que, dans la direction du plan de la plaque, le contour extérieur de la plaque de recouvrement (3, 23) dépasse celui des saillies (6, 26).

2. Dispositif de fixation selon la revendication 1, caractérisé en ce que la plaque de recouvrement (3, 23) comporte, sur sa face plate (4, 24), des moyens de guidage (8, 28) qui coopèrent avec l'élément de construction (1, 21).

3. Dispositif de fixation selon la revendication 2, caractérisé en ce que les moyens de guidage (8, 28) sont formés par les rives repliées de la plaque de recouvrement (3, 23).

4. Dispositif de fixation selon la revendication 2 ou 3, caractérisé en ce qu'il est prévu deux moyens de guidage parallèles.

5. Dispositif de fixation selon les revendications 1 à 4, caractérisé en ce que la plaque de recouvrement (23) comporte une partie d'arrêt (29) pouvant être reliée à l'élément de construction (21).

6. Dispositif de fixation selon la revendication 5, caractérisé en ce que la partie d'arrêt (29) est au moins partiellement élastique parallèlement à la face plate (24) de l'élément de construction (21) et, à l'état détendu, dépasse au moins partiellement du contour extérieur de l'ouverture (22) de l'élément de construction (21).
